(19) Europäisches Patentamt
European Patent Office
Office européen des brevets

(11) **EP 1 158 642 B1**

(12) **FASCICULE DE BREVET EUROPEEN**

(45) Date de publication et mention
de la délivrance du brevet:
**14.11.2007 Bulletin 2007/46**

(51) Int Cl.:
*H02H 7/085* *(2006.01)*     *G05B 19/4062* *(2006.01)*

(21) Numéro de dépôt: **01401260.3**

(22) Date de dépôt: **16.05.2001**

(54) **Système de détection de la position de fin de course d'une pièce mobile par détection du courant de blocage**

System zur Feststellung der Endposition eines mobilen Teiles durch Festellung des Sperrstroms

System for detecting the end position of a mobile part by detecting the blocking current

(84) Etats contractants désignés:
**DE FR GB IT SE**

(30) Priorité: **18.05.2000 FR 0006345**

(43) Date de publication de la demande:
**28.11.2001 Bulletin 2001/48**

(73) Titulaire: **Delphi Technologies, Inc.
Troy, MI 48007 (US)**

(72) Inventeur: **Herbert, Tanguy Alain
35120 Hirel (FR)**

(74) Mandataire: **Abello, Michel
Cabinet PEUSCET
161, rue de Courcelles
75017 Paris (FR)**

(56) Documents cités:
**EP-A- 0 267 064          EP-A- 0 697 305
DE-A- 4 420 122          FR-A- 2 696 884
US-A- 5 399 950          US-A- 5 723 962
US-A- 5 734 245**

**EP 1 158 642 B1**

**Description**

La présente invention concerne un système de détection de la position de fin de course d'une pièce mobile actionnée par un moteur électrique, lorsqu'il n'existe pas de retour d'information sur la position de la pièce mobile depuis par exemple un capteur de butée coopérant avec celle-ci.

Pour un ouvrant ou une autre pièce mobile à commande électrique monté sur un véhicule automobile, comme par exemple une vitre de portière, un toit ouvrant, ou une porte coulissante, il est connu de détecter la position de fin de course de la pièce mobile à l'aide d'un capteur de butée coopérant avec celle-ci et apte à délivrer un signal de fin de course.

Il arrive aussi qu'il n'existe pas de retour d'information directement utilisable pour savoir si l'ouvrant est en fin de course ou non. Cependant, il est important de pouvoir rapidement détecter l'arrivée de la pièce mobile en position de fin de course afin de ne pas alimenter le moteur électrique en couple bloqué pendant une longue durée. En effet, un moteur électrique alimenté en couple bloqué est parcouru par une intensité de blocage élevée qui provoque un échauffement préjudiciable à l'ensemble de l'installation électrique. Cet échauffement peut éventuellement être utilisé pour déclencher un disjoncteur thermique afin d'interrompre l'alimentation du moteur électrique.

Alternativement dans ce cas, il est aussi connu de d'utiliser dans le dispositif de commande électrique d'une telle pièce mobile une mesure du courant d'alimentation du moteur électrique, afin de tenter de détecter la présence du courant de blocage dans le circuit d'alimentation, ce courant de blocage étant interprété comme témoin de la position de fin de course de la pièce mobile. Dans ce cas, la méthode de commande de la pièce mobile consiste à mesurer régulièrement l'intensité du courant circulant dans le circuit d'alimentation du moteur électrique et à la comparer à une valeur de seuil prédéterminée. L'alimentation est par exemple automatiquement coupée dès que l'intensité du courant mesurée dépasse la valeur de seuil. Dans cette technique reposant sur un seuil prédéterminé, la détermination de la valeur du seuil comporte plusieurs difficultés. Le seuil doit être précisément déterminé car s'il est fixé trop haut, le courant de blocage n'est jamais détecté et le moteur s'échauffe. Si au contraire le seuil est fixé trop bas, le courant de transfert risque d'atteindre momentanément une valeur élevée au-dessus du seuil, en raison de l'existence de frottements mécaniques sur la pièce mobile, ce qui entraînerait l'arrêt du moteur avant que le déplacement de la pièce mobile ne soit terminé.

Pour tout circuit d'alimentation d'un moteur électrique, il existe en général un écart bien marqué entre le courant de transfert et le courant de blocage. Cet écart vaut typiquement 4 à 6 A. En revanche, la valeur absolue des courant de transfert et courant de blocage présente de grandes variations en fonction des moteurs, des véhicules et des conditions d'utilisation. D'une part, les moteurs électriques de même technologie présentent des différences individuelles de caractéristiques électriques, et les caractéristiques d'un même moteur changent avec son vieillissement. D'autre part, la valeur typique du courant de transfert dépend des frottements qui s'exercent sur la pièce mobile au cours de son déplacement, eux-mêmes fonction de la conception et de l'état du véhicule sur lequel est montée la pièce. Un autre paramètre qui influe sur la valeur des courants circulant dans le circuit d'alimentation du moteur est la tension délivrée par la batterie, tension qui peut varier classiquement entre 10V et 16V lors de l'utilisation normale du véhicule, en fonction de son état de charge et de l'état en marche ou arrêté du moteur du véhicule. Le courant de blocage dans un circuit donné est en effet proportionnel à la tension délivrée par la batterie. Enfin, le courant de transfert d'un même dispositif varie en fonction de la température, le courant de transfert étant plus élevé à basse température à cause de la contraction des éléments mécaniques qui accroît les frottements. Pour équiper un véhicule automobile de série, un système doit pouvoir fonctionner correctement entre -30°C et +40°C.

Pour toutes ces raisons, il serait indispensable à la bonne fiabilité d'un système de détection à seuil prédéterminé de pouvoir étalonner le seuil prédéterminé pour chaque unité fabriquée, ce qui est irréaliste en raison des contraintes sur les coûts de fabrication. D'autre part, pour réduire les coûts de fabrication, il est avantageux qu'un système de commande donné puisse fonctionner avec un maximum de modèles différents de moteurs électriques sans étalonnage individuel. La présente invention vise à fournir un tel système de détection avec un seuil de fin de course automatiquement actualisé, permettant de prendre en compte les variations de la valeur appropriée du seuil dont les causes ont été énoncées ci-dessus, et pouvant être adapté à un grand nombre de modèles de moteurs électriques.

Les documents US-A-5 399 950 et EP-A-0 267 064 décrivent des systèmes selon le préambule de la revendication 1.

Pour cela, l'invention a pour objet un système de détection de la position de fin de course d'une pièce mobile selon la revendication 1.

De préférence, ladite condition d'échantillonnage à haute fréquence est validée par la réception par ledit système de commande d'un ordre de déplacement.

Dans une forme de réalisation particulière, l'acquisition desdites mesures successives des valeurs du courant d'alimentation est réalisée à une fréquence d'échantillonnage basse f2 inférieure à ladite fréquence d'échantillonnage haute f1 sensiblement à partir de la réception par ledit système de commande d'un ordre de déplacement et jusqu'à la validation de ladite condition d'échantillonnage à haute fréquence.

Avantageusement dans ce cas, ladite fréquence d'échantillonnage basse f2 est sensiblement égale à 1 kHz, ladite fréquence d'échantillonnage haute f1 étant sensiblement égale à 10 kHz.

De préférence dans ce cas, ladite condition d'échantillonnage à haute fréquence est validée lorsque ladite valeur du courant mesurée est supérieure à une valeur de seuil de démarrage I .

Avantageusement, ladite valeur de seuil de démarrage I est prédéterminée.

De préférence, l'actualisation de ladite valeur de seuil de fin de course S consiste à lui donner la dernière valeur maximale mesurée de ladite surintensité de démarrage diminuée d'une valeur de tolérance.

Selon une autre caractéristique de l'invention, ledit système de détection est apte à mesurer successivement des valeurs actuelles de la tension délivrée par une batterie assurant l'alimentation dudit actionneur électrique, à mémoriser ladite dernière valeur maximale mesurée de la surintensité de démarrage et à l'actualiser en fonction desdites valeurs actuelles mesurées de ladite tension délivrée.

Avantageusement, ladite valeur maximale de la surintensité de démarrage mémorisée est actualisée proportionnellement auxdites valeurs actuelles mesurées de ladite tension délivrée.

De préférence, ledit système de détection est apte à mémoriser ladite valeur de tolérance et à l'actualiser en fonction desdites valeurs actuelles mesurées de ladite tension délivrée.

Dans une autre forme de réalisation de l'invention, ladite valeur de tolérance est prédéterminée, sensiblement égale à 1,5 A.

Dans encore une autre forme de réalisation de l'invention, ladite valeur de tolérance est nulle.

Avantageusement, ledit système de détection est apte à actualiser ladite durée initiale d'acquisition à haute fréquence en fonction desdites valeurs actuelles mesurées de ladite tension délivrée.

Dans une autre forme de réalisation de l'invention, ladite durée initiale d'acquisition à haute fréquence est prédéterminée, comprise entre sensiblement 5 et 20 ms.

De préférence, ledit système de détection est apte à convertir lesdites valeurs analogiques mesurées du courant d'alimentation en une représentation numérique.

L'invention sera mieux comprise, et les buts, détails, caractéristiques et avantages de celle-ci apparaîtront plus clairement au cours de la description suivante d'un mode de réalisation particulier de l'invention, donné uniquement à titre illustratif et non limitatif, en référence au dessin annexé. Sur ce dessin :

- la figure 1 est un schéma synoptique d'un moteur électrique pour déplacer une pièce mobile, de son système de commande et d'un système de détection selon l'invention ;

- la figure 2 est un chronogramme représentant la valeur du courant d'alimentation du moteur de la figure 1 entre l'initiation de l'alimentation du moteur par le système de commande de la figure 1 et l'interruption de cette alimentation ;

- la figure 3 est un chronogramme représentant la valeur du courant d'alimentation du moteur de la figure 1 et la valeur d'un signal de commande du moteur délivré par le système de commande de la figure 1, sur un intervalle de temps incluant l'initiation de l'alimentation du moteur, pour une tension de batterie de 8V ;

- la figure 4 est un chronogramme analogue à la figure 3, pour une tension de batterie de 19V ;

- la figure 5 est un chronogramme représentant la valeur du courant d'alimentation du moteur de la figure 1 et la valeur d'un signal en créneaux commandant l'acquisition à haute fréquence de mesures de ce courant par le système de détection selon l'invention, sur le même intervalle de temps que celui représenté à la figure 4.

- la figure 6 est un détail du chronogramme de la figure 5 délimité par le cadre VI.

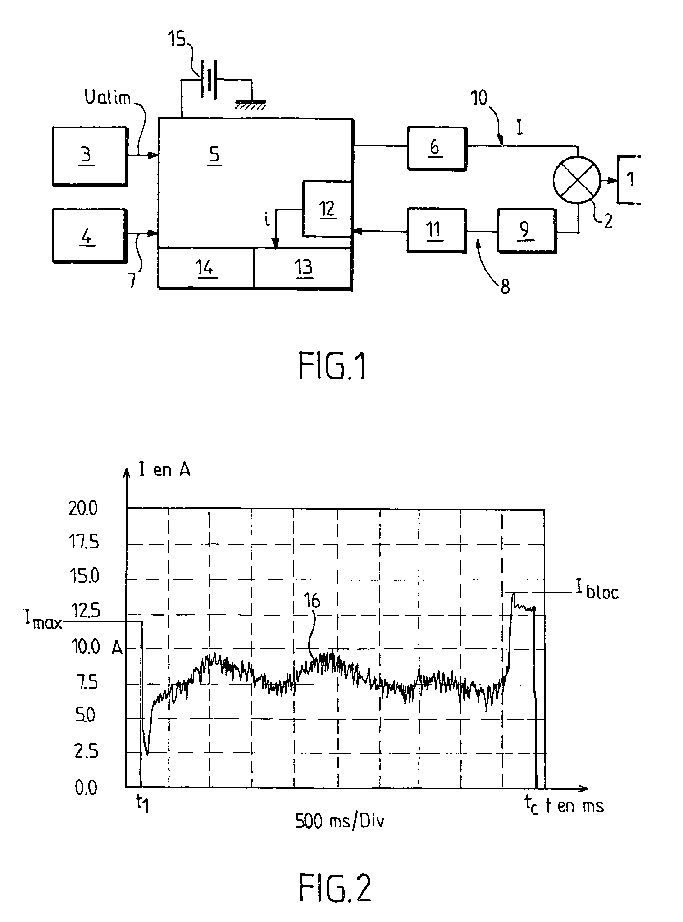

Un système de commande du déplacement d'une pièce mobile 1 combiné à un système de détection de la position de fin de course selon l'invention va maintenant être décrit en référence à la figure 1. La pièce mobile 1 est un élément mobile d'un véhicule, par exemple une vitre de portière, un toit ouvrant, ou une porte coulissante. Le déplacement de la pièce mobile 1, qui peut être une rotation, une translation, ou une quelconque combinaison des deux types de mouvement, est limité entre deux positions de fin de course, par exemple la position d'ouverture et la position de fermeture d'un ouvrant de véhicule. Le déplacement de la pièce mobile 1 de l'une à l'autre de ses positions de fins de course est effectué au moyen d'un moteur électrique 2. Le système de commande du déplacement de la pièce mobile 1 comporte des moyens de commande 4, un microcontrôleur électronique 5 et des relais 6. Une batterie d'alimentation 3 est reliée au microcontrôleur électronique 5 afin d'alimenter ce dernier, le moteur électrique 2, et d'autres organes du véhicule. Les moyens de commande 4, qui comportent par exemple le levier de commande d'un lève-vitre électrique, sont reliés au microcontrôleur 5 pour pouvoir lui délivrer un ordre de déplacement 7. Au repos, l'intensité du courant d'alimentation I qui alimente le moteur électrique 2 est sensiblement nulle, le circuit d'alimentation 10 étant ouvert.

Lorsqu'il reçoit un ordre de déplacement 7, le microcontrôleur 5 initie l'alimentation du moteur électrique 2 par l'intermédiaire du circuit d'alimentation 10 comportant les relais 6. Si la pièce mobile 1 n'est pas bloquée, le courant d'alimentation I entraîne l'activation du moteur électrique 2 qui provoque le déplacement de la pièce mobile 1. Si le déplacement de celle-ci est bloqué, notamment lorsque la pièce mobile 1 a atteint une position de fin de course, l'intensité du courant d'alimentation I atteint une valeur maximale Ibloc, appelée intensité de blocage, du fait que l'actionneur électrique 2 ne peut plus tourner et ne génère donc plus de force contre-électromotrice dans le circuit d'alimentation 10. L'intensité de blocage Ibloc provoque un fort échauffement du circuit d'alimentation 10 du fait de sa valeur élevée, typiquement voisine de 15 à 20A. Le système de détection de la position de fin de course selon l'invention vise à détecter la présence de l'intensité de blocage Ibloc dans le circuit d'alimentation 10.

Le système de détection de la position de fin de course selon l'invention va maintenant être décrit en référence à la figure 1. Le système de détection comporte une chaîne d'acquisition 8 pour acquérir des mesures de l'intensité du courant d'alimentation I. La chaîne d'acquisition 8 comporte un filtre passe-bas 9 pour lisser le signal, un amplificateur 11 et un convertisseur analogique/numérique 12 pouvant être inclus dans le microcontrôleur 5. Le convertisseur analogique/numérique 12 délivre un signal d'intensité numérisé i représentatif la valeur de l'intensité I. Le signal numérisé i est codé sur 8 bits. Le microcontrôleur 5 comporte aussi une unité de mémoire vive 13 pour stocker des valeurs du signal d'intensité i et une unité de mémoire morte 14 pour stocker d'autres informations.

Le fonctionnement du système de détection de la position de fin de course selon l'invention va maintenant être décrit en référence aux figures 2 à 6. L'évolution de l'intensité d'alimentation I entre la réception par le microcontrôleur 5 d'un ordre de déplacement 7 et l'arrivée en fin de course de la pièce mobile 1, supposée initialement non bloquée, est représenté sur la courbe 16 du chronogramme de la figure 2. Sur ce chronogramme, le temps est représenté en abscisses avec l'échelle de 500 ms par division. L'intensité d'alimentation I est représentée en ordonnées avec l'échelle de 2,5 A par division.

Immédiatement après la réception de l'ordre de déplacement 7 par le microcontrôleur 5, l'intensité d'alimentation I reste sensiblement nulle pendant un délai d'exécution t correspondant au temps de traitement et de transmission de l'ordre de déplacement 7 par le microcontrôleur 5. A l'instant t1 correspondant à la fermeture du circuit d'alimentation 10, l'intensité d'alimentation I augmente brusquement jusqu'à une valeur maximale Imax légèrement inférieure l'intensité de blocage Ibloc avant de décroître jusqu'à une valeur plus faible. Ce pic de courant est appelé surintensité de démarrage du moteur électrique 2. Elle est due à l'absence de force contre-électromotrice dans le circuit d'alimentation 10 tant que le moteur électrique 2 est à l'arrêt. La mise en mouvement du moteur électrique 2 à partir de l'instant t1 n'est pas immédiate à cause de l'inertie électrique de certains éléments du circuit, comme les bobinages (non représentés) du moteur électrique 2. Contrairement à l'intensité de blocage Ibloc qui peut durer tant que le moteur électrique 2 est alimenté en couple bloqué, la surintensité de démarrage I ne dure que quelques dizaines de millisecondes, jusqu'à ce que le moteur électrique 2 se mette en mouvement.

Après la relaxation de la surintensité de démarrage, le moteur électrique 2 étant en mouvement, le courant I parcourant le circuit d'alimentation 10 est appelé courant de transfert ; il dure pendant tout le déplacement de la pièce mobile 1, c'est-à-dire typiquement quelques secondes. L'intensité du courant I de transfert présente des oscillations sur des périodes de l'ordre de la seconde correspondant aux variations de l'effort fourni par le moteur électrique 2 pour déplacer la pièce mobile 1. Cet effort dépend notamment des frottements entre la pièce mobile 1 et son support, qui sont par exemple les frottements entre une vitre de portière et ses glissières. Comme visible sur la figure 2, l'intensité du courant I de transfert présente aussi des fluctuations à plus haute fréquence induites par des perturbations électriques dans la chaîne d'acquisition 8. Entre le début et la fin du déplacement de la pièce mobile 1, l'intensité du courant I de transfert reste nettement inférieure à la valeur maximale Imax de la surintensité de démarrage.

Enfin lorsque la pièce mobile atteint sa position de fin de course, le moteur électrique 2 se trouve alimenté en couple bloqué et l'intensité d'alimentation I augmente brusquement jusqu'à la valeur de l'intensité de blocage Ibloc. L'intensité de blocage Ibloc dépasse de plus de 5A la valeur moyenne du courant I de transfert et dépasse aussi légèrement Imax. A l'instant tc, le microcontrôleur 5, ayant détecté la présence de l'intensité de blocage Ibloc par la méthode qui va être présentée maintenant, interrompt l'alimentation du moteur électrique 2 en ouvrant le circuit d'alimentation 10.

Le microcontrôleur 5 est apte à effectuer des acquisitions de la valeur de l'intensité I de manière périodique à différentes fréquences cadencées par l'horloge 15. Les valeurs de l'intensité I mesurées sont converties en le signal d'intensité i et peuvent être mémorisées dans l'unité de mémoire vive 13. A partir de la validation d'une condition d'acquisition à haute fréquence, le microcontrôleur 5 initie une séquence d'acquisition des valeurs de l'intensité I à une fréquence haute f1. Cette séquence d'acquisition s'étend pendant une durée initiale d'acquisition à haute fréquence DHF. La durée initiale d'acquisition à haute fréquence DHF doit être choisie supérieure au délai d'exécution t pour englober le pic de surintensité de démarrage dans tous les cas de fonctionnement.

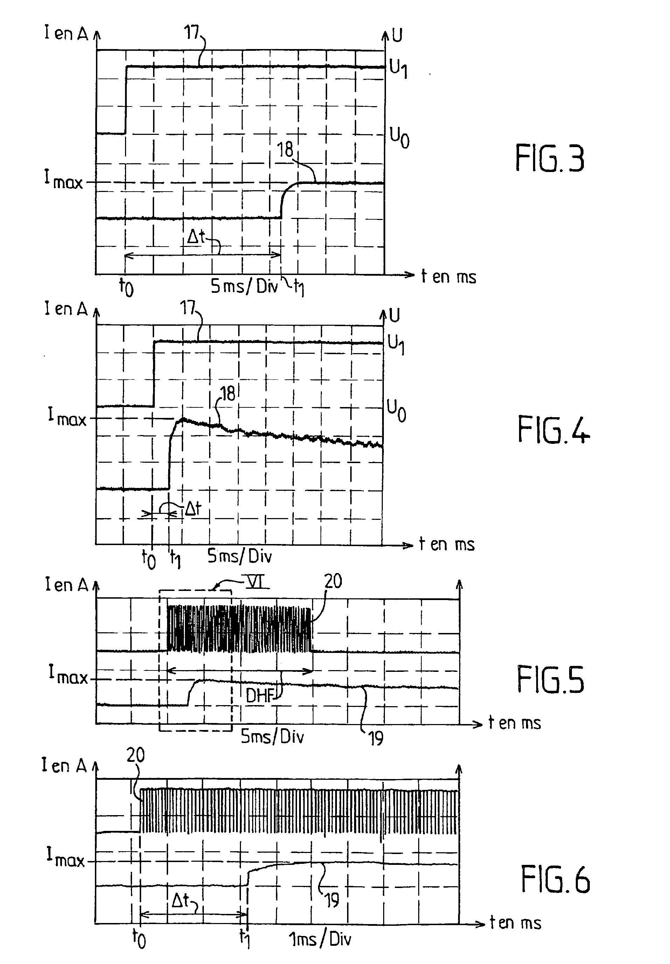

Comme visible sur les figures 3 et 4, le délai d'exécution t varie avec la tension Ualim aux bornes de la batterie d'alimentation 3. La figure 3 représente deux signaux en fonction du temps, sur une durée s'étendant de 5 ms avant l'instant t0 de réception par le microcontrôleur 5 d'un ordre de déplacement 7 à la mise en mouvement du moteur électrique 2. La courbe du haut 17 est un signal de tension U en forme de marche qui passe d'une valeur basse U0 lorsque le microcontrôleur 5 est au repos à une valeur haute U1 à l'instant t0, lorsque le microcontrôleur reçoit un ordre de déplacement 7. La courbe du bas 18 représente l'intensité d'alimentation I, qui reste nulle jusqu'à l'instant t1, avant d'augmenter brusquement jusqu'à la valeur Imax puis de décroître. Sur la figure 3, la surintensité de démarrage n'a pas une apparence de pic car sa représentation est très dilatée, la base de temps étant divisée par 100 par rapport à celle de la figure 2. La figure 3 représente un relevé effectué avec une tension de batterie Ualim de 8V. Le délai d'exécution t séparant l'instant t0 de l'instant t1 dure 27,35 ms. La figure 4 représente les mêmes grandeurs que la figure 3 dans le cas où la tension de batterie Ualim est de 19V. Le délai d'exécution t dure alors seulement 2,95ms. Le délai d'exécution t est donc d'autant plus court que la tension d'alimentation Ualim est élevée, en raison du plus faible temps de réaction des relais 6. En conséquence, la durée DHF est choisie typiquement entre 5 et 20 ms en fonction de la tension de batterie Ualim, qui peut varier typiquement entre 10V et 16V dans des conditions normales d'utilisation.

Sur la figure 5, le temps en représenté en abscisses sur le même intervalle et avec la même base de temps qu'à la figure 4. La courbe du bas 19 représente la valeur de l'intensité d'alimentation I tandis que la courbe du haut représente un signal en créneaux 20 qui cadence l'acquisition des mesures de l'intensité I par le microcontrôleur 5. Le signal en créneaux 20 est obtenu par l'intermédiaire de l'horloge 15. Une mesure de I suivie d'une conversion en signal d'intensité i sont réalisées à chaque front montant du signal en créneaux 20. Le signal en créneaux 20 est mieux visible sur la figure 6 qui représente un détail de la figure 5. La séquence d'acquisition à haute fréquence délimitée par le signal en créneaux 20 de la figure 5 comporte 192 créneaux sur une durée initiale d'acquisition à haute fréquence DHF valant 20 ms. La fréquence d'acquisition haute f1 vaut alors 9,6 kHz.

Dans une première variante de l'invention, représentée aux figures 4 et 5, la condition d'acquisition à haute fréquence est validée par chaque réception par le microcontrôleur 5 d'un ordre de déplacement 7. Le début du signal en créneaux 20 de la figure 5 coïncide en effet avec le passage du signal de tension 17 de la figure 4 à sa valeur haute U1 à l'instant t0. Dans une deuxième variante de l'invention (non représentée), la condition d'acquisition à haute fréquence est validée lorsque l'intensité d'alimentation I mesurée dépasse une valeur de seuil de démarrage I fixée, l'acquisition des valeurs de l'intensité I étant réalisée à une fréquence basse f2 valant typiquement 1 kHz entre la réception par le microcontrôleur 5 d'un ordre de déplacement 7 et la validation de la condition d'acquisition à haute fréquence. La valeur de seuil de démarrage I est fixée à une valeur faible, inférieure à 1A par exemple, afin de permettre le commencement de la séquence d'acquisition à haute fréquence avant que l'intensité I n'ait atteint son maximum Imax.

Cette deuxième variante permet d'alléger la charge du processeur (non représenté) du microcontrôleur 5 pendant le délai d'exécution t. En effet, lors de la séquence d'acquisition à haute fréquence, ce processeur n'est pas disponible pour exécuter d'autres tâches, tandis qu'il reste partiellement disponible lors de l'acquisition à fréquence basse. Quelle que soit la variante utilisée, le système de détection selon l'invention n'utilise qu'une fraction des ressources d'un processeur classique et ne nécessite pas l'utilisation d'un processeur dédié.

La détection de la position de fin de course de la pièce mobile 1 est réalisée de la manière suivante : lors de la séquence d'acquisition à haute fréquence, la première valeur du signal d'intensité i est mémorisée, puis toute nouvelle valeur du signal d'intensité i n'est mémorisée dans l'unité de mémoire vive 13 que si elle est supérieure à la précédente. Ainsi, la valeur maximale imax du signal d'intensité i représentant la valeur maximale mesurée de l'intensité d'alimentation I ayant circulé dans le circuit 10 au cours de la séquence d'acquisition à haute fréquence est mémorisée à la fin de la séquence d'acquisition. Du fait du choix de la durée initiale d'acquisition à haute fréquence DHF, cette valeur maximale de l'intensité d'alimentation I est sensiblement égale à la valeur maximale de la surintensité de démarrage Imax du moteur électrique 2. La valeur maximale imax est utilisée pour calculer une valeur de seuil de fin de course S.

Après l'exécution de la séquence d'acquisition à haute fréquence, le microcontrôleur 5 continue de mesurer périodiquement la valeur actuelle de l'intensité d'alimentation I et de la convertir en signal numérique d'intensité i. La valeur actuelle du signal d'intensité i est comparée à la valeur de seuil de fin de course S et dès que i dépasse ce seuil de fin de course S, le microcontrôleur interrompt l'alimentation du moteur électrique 2.

Le seuil de fin de course S est choisi égal à la valeur mémorisée imax du signal d'intensité i diminuée d'une valeur de tolérance iTOL, qui représente une intensité de tolérance ITOL. La valeur de iTOL est aussi mémorisée. Ainsi, lors de l'arrivée en fin de course de la pièce mobile 1, le signal d'intensité i prend une valeur ibloc représentant la valeur de l'intensité de blocage Ibloc et supérieure au seuil de fin de course S. L'algorithme de commande exécuté par le microcontrôleur 5 après la séquence d'acquisition à haute fréquence est donc le suivant :

1. acquisition d'une mesure de l'intensité I
2. conversion en signal d'intensité i
3. si $\underline{i} < S = i_{max} - i_{TOL}$, retour à 1
si $\underline{i}\ S = i_{max} - i_{TOL}$, interruption de l'alimentation.

Le choix d'une valeur de tolérance iTOL strictement positive peut être nécessaire au bon fonctionnement du dispositif dans le cas où un ordre de déplacement 7 est exécutée par le microcontrôleur 5 afin de déplacer la pièce mobile 1 dans la direction de la position de fin de course qu'elle occupe déjà. Dans ce cas, la surintensité de démarrage Imax est immédiatement suivie de l'intensité de blocage Ibloc, le moteur électrique 2 ne pouvant pas entrer en mouvement. Ainsi, le circuit d'alimentation 10 peut être parcouru par l'intensité de blocage Ibloc avant la fin de la séquence d'acquisition à haute fréquence, ce qui implique que la valeur mémorisée imax la fin de cette séquence représente alors l'intensité de blocage Ibloc au lieu de la surintensité de démarrage Imax. Le choix d'une valeur de tolérance iTOL strictement positive assure alors que la valeur ibloc représentant la valeur de l'intensité de blocage Ibloc reste supérieure au seuil de fin de course S, qui est sensiblement égal à (ibloc - iTOL) dans ce cas.

Dans la réalisation décrite ici, la valeur maximale de l'intensité pouvant être convertie en le signal numérique d'intensité i codé sur 8 bits est 48,78A. L'incrément d'intensité de la représentation numérisée est donc sensiblement de 191 mA. La valeur de tolérance iTOL est exprimée en nombre d'incréments de conversion dans la mise en oeuvre logicielle de l'invention. Il a été établi empiriquement qu'une valeur de l'intensité de tolérance ITOL de 1,5A était adaptée au bon fonctionnement du système de détection avec une tension d'alimentation Ualim variant entre 10 et 16 V. Cette valeur de l'intensité de tolérance ITOL correspond à 7 incréments de conversion pour la valeur de tolérance iTOL. En variante, la valeur de tolérance iTOL peut être choisie nulle. Dans une autre variante de l'invention, le seuil de fin de course S est choisi égal à la valeur mémorisée imax multipliée par un coefficient de tolérance compris entre 0 et 1.

Le fonctionnement du système de détection selon l'invention est fondé sur l'hypothèse que la surintensité de démarrage Imax a une valeur intermédiaire entre la valeur maximale du courant I pendant le transfert de la pièce mobile 1 et la valeur du courant de blocage Ibloc du moteur électrique 2. Cette hypothèse est valide si les caractéristiques électriques du circuit d'alimentation 10 (tensions, impédances) sont stables. La valeur du seuil de fin de course S est utilisée dans une période très courte, de l'ordre de quelques secondes, suivant sa détermination, ce qui minimise les risques de variations desdites caractéristiques électriques. Cependant, si la tension d'alimentation Ualim délivrée par la batterie 3 varie entre l'acquisition de Imax et l'arrivée en fin de course de la pièce mobile 1, cette hypothèse peut être mise en défaut.

En effet, si la tension Ualim augmente après la mémorisation de imax, le courant I de transfert augmente proportionnellement à Ualim et peut dépasser Imax, ce qui provoque l'arrêt de la pièce mobile avant qu'elle n'atteigne sa fin de course. Inversement, si la tension d'alimentation Ualim diminue après la mémorisation de imax, la valeur de l'intensité de blocage Ibloc diminue proportionnellement à Ualim et le signal ibloc peut devenir inférieur à la valeur du seuil de fin de course S, ce qui empêche sa détection par le microcontrôleur 5. Ce dernier problème est en particulier rencontré lorsque, la batterie 3 étant initialement peu chargée, un ordre de déplacement 7 est exécutée par le microcontrôleur 5 afin de déplacer la pièce mobile 1. Dans ce cas, du fait de la faiblesse de la charge de la batterie 3, la tension d'alimentation Ualim diminue entre le moment où le circuit d'alimentation 10 est parcouru par la surintensité de démarrage Imax et celui où il est parcouru par l'intensité de blocage Ibloc, de sorte que ibloc devient inférieur à imax et éventuellement au seuil de fin de course S. L'augmentation ou la diminution de la tension d'alimentation Ualim peut aussi être causée par des actions sur d'autres organes du véhicule, comme l'arrêt ou le démarrage du moteur du véhicule (non représenté).

Pour remédier à ces possibles dysfonctionnements dus aux variations de la tension d'alimentation Ualim, le microcontrôleur 5 comporte un système de mesure (non représenté) de la tension d'alimentation Ualim. La valeur de la tension d'alimentation Ualim est mesurée et mémorisée dans l'unité de mémoire vive 13, en même temps que la valeur de la surintensité de démarrage Imax, puis elle est mesurée de manière périodique, par exemple à chaque acquisition par le microcontrôleur 5 d'une valeur de l'intensité d'alimentation I. Si la tension d'alimentation Ualim mesurée varie avant la détection de la position de fin de course de la pièce mobile 1 par le microcontrôleur 5, celui-ci modifie la valeur du seuil de fin de course S mémorisée en fonction de la valeur actuelle de la tension d'alimentation Ualim(nouveau). La valeur mémorisée de imax, notée imax(ancien), est remplacée par le microcontrôleur 5 par une nouvelle valeur imax (nouveau) calculée par la règle de trois suivante :

$$\text{imax (nouveau)} = \text{Ualim(nouveau)} * \text{imax(ancien)} / \text{Ualim(ancien)},$$

où Ualim(ancien) désigne la valeur mémorisée de la tension d'alimentation.

En variante, la valeur de tolérance iTOL mémorisée est aussi remplacée par le microcontrôleur 5 par une nouvelle valeur de tolérance calculée en fonction de la valeur mémorisée de la tension d'alimentation Ualim(ancien) et de la valeur actuelle de la tension d'alimentation Ualim(nouveau) par une règle de trois analogue. Dans une forme de réalisation particulière, le microcontrôleur 5 est aussi apte à actualiser la durée initiale d'acquisition à haute fréquence DHF en fonction des valeurs mesurées de la tension d'alimentation Ualim.

Le système de détection selon l'invention a été mis en oeuvre avec succès pour une tension d'alimentation Ualim variant entre 7V et 22V. En dessous de 7V, la tension d'alimentation Ualim n'est plus suffisante pour fermer les contacteurs électriques des relais 6. Au-delà de 22V, la tension d'alimentation Ualim peut détériorer ces mêmes contacteurs.

Dans les différentes variantes de l'invention décrites, les moyens utilisés pour réaliser le système de détection selon l'invention sont des ressources classiques (convertisseur analogique/numérique, microcontrôleur, moyens logiciels) rencontrées dans les systèmes de commande d'ouvrants.

Bien que l'invention ait été décrite en liaison avec plusieurs variantes de réalisation particulières, il est évident qu'elle n'y est nullement limitée et qu'elle comprend tous les équivalents techniques des moyens décrits ainsi que leurs combinaisons si celles-ci entrent dans le cadre de l'invention.

## Revendications

1. Système de détection de la position de fin de course d'une pièce mobile (1), ledit système de détection (5,8,9,11-15) ne comprenant pas de capteur de fin de course coopérant avec ladite pièce mobile (1), ladite pièce mobile (1) ayant au moins une position de fin de course et étant apte à être déplacée au moyen d'un actionneur électrique (2), un système de commande (5) étant apte à recevoir un ordre de déplacement (7) par l'intermédiaire de moyens de commande (4) et à commander l'activation dudit actionneur électrique (2) en réponse à la réception dudit ordre de déplacement (7), ledit système de détection comportant une mémoire (13,14) pour mémoriser une valeur de seuil de fin de course S, et étant apte à mesurer successivement des valeurs du courant d'alimentation (I) dudit actionneur électrique (2) après chaque réception par ledit système de commande (5) d'un ordre de déplacement (7) et lors du déplacement de ladite pièce mobile (1), afin de délivrer un signal caractéristique de l'état de fin de course de ladite pièce mobile (1) lorsque ladite valeur du courant (I) mesurée est supérieure à ladite valeur de seuil de fin de course S, ledit courant d'alimentation (I) pouvant prendre successivement des valeurs égales à une surintensité de démarrage ($I_{max}$) dudit actionneur électrique (2), des valeurs égales à un courant de transfert lors du déplacement de ladite pièce mobile (1) et des valeurs égales à un courant de blocage ($I_{bloc}$) dudit actionneur électrique (2) lorsque ladite pièce mobile (1) est en fin de course, ledit système de détection étant apte à mesurer des valeurs actuelles de ladite surintensité de démarrage ($I_{max}$) et à actualiser ladite valeur de seuil de fin de course S mémorisée en fonction desdites valeurs actuelles mesurées de ladite surintensité de démarrage ($I_{max}$), **caractérisé par le fait qu'**il est apte à acquérir lesdites mesures successives des valeurs du courant d'alimentation (I) par échantillonnage périodique, l'acquisition desdites mesures successives des valeurs actuelles de ladite surintensité de démarrage ($I_{max}$) étant réalisée à une fréquence d'échantillonnage haute $f_1$ pendant une durée initiale d'acquisition à haute fréquence ($D_{HF}$) commençant à la validation d'une condition d'échantillonnage à haute fréquence.

2. Système de détection selon la revendication 1, **caractérisé par le fait que** ladite condition d'échantillonnage à haute fréquence est validée par la réception par ledit système de commande (5) d'un ordre de déplacement (7).

3. Système de détection selon la revendication 1, **caractérisé par le fait que** l'acquisition desdites mesures successives des valeurs du courant d'alimentation (I) est réalisée à une fréquence d'échantillonnage basse $f_2$ inférieure à ladite fréquence d'échantillonnage haute $f_1$ sensiblement à partir de la réception par ledit système de commande (5) d'un ordre de déplacement (7) et jusqu'à la validation de ladite condition d'échantillonnage à haute fréquence.

4. Système de détection selon la revendication 3, **caractérisé par le fait que** ladite fréquence d'échantillonnage basse $f_2$ est sensiblement égale à 1 kHz, ladite fréquence d'échantillonnage haute $f_1$ étant sensiblement égale à 10 kHz.

5. Système de détection selon la revendication 3 ou 4, **caractérisé par le fait que** ladite condition d'échantillonnage à haute fréquence est validée lorsque ladite valeur du courant (I) mesurée est supérieure à une valeur de seuil de démarrage I.

6. Système de détection selon la revendication 5, **caractérisé par le fait que** ladite valeur de seuil de démarrage I est prédéterminée.

7. Système de détection selon l'une des revendications 1 à 6, **caractérisé par le fait que** l'actualisation de ladite valeur de seuil de fin de course S consiste à lui donner la dernière valeur maximale mesurée de ladite surintensité de démarrage diminuée d'une valeur de tolérance.

8. Système de détection selon l'une des revendications 1 à 7, **caractérisé par le fait qu'**il est apte à mesurer successivement des valeurs actuelles de la tension ($U_{alim}$) délivrée par une batterie (3) assurant l'alimentation dudit actionneur électrique (2), à mémoriser ladite dernière valeur maximale mesurée de la surintensité de démarrage et à l'actualiser en fonction desdites valeurs actuelles mesurées de ladite tension délivrée ($U_{alim}$).

9.  Système de détection selon la revendication 8, **caractérisé par le fait que** ladite valeur maximale de la surintensité de démarrage mémorisée est actualisée proportionnellement auxdites valeurs actuelles mesurées de ladite tension délivrée ($U_{alim}$).

10. Système de détection selon la revendication 7 prise en combinaison avec l'une des revendications 8 ou 9, **caractérisé par le fait qu'**il est apte à mémoriser ladite valeur de tolérance et à l'actualiser en fonction desdites valeurs actuelles mesurées de ladite tension délivrée ($U_{alim}$).

11. Système de détection selon la revendication 7, **caractérisé par le fait que** ladite valeur de tolérance est prédéterminée, sensiblement égale à 1,5 A.

12. Système de détection selon la revendication 7, **caractérisé par le fait que** ladite valeur de tolérance est nulle.

13. Système de détection selon l'une des revendications 8 à 10, **caractérisé par le fait qu'**il est apte à actualiser ladite durée initiale d'acquisition à haute fréquence ($D_{HF}$) en fonction desdites valeurs actuelles mesurées de ladite tension délivrée ($U_{alim}$).

14. Système de détection selon l'une des revendications 1 à 12, **caractérisé par le fait que** ladite durée initiale d'acquisition à haute fréquence ($D_{HF}$) est prédéterminée, comprise entre sensiblement 5 et 20 ms.

15. Système de détection de la position de fin de course d'une pièce mobile (1) selon l'une des revendications 1 à 14, **caractérisé par le fait qu'**il est apte à convertir lesdites valeurs analogiques mesurées du courant d'alimentation (I) en une représentation numérique (i).

**Claims**

1.  System for detecting the end-of-travel position of a movable part (1), the said detection system (5, 8, 9, 11-15) comprising no end-of-travel sensor interacting with the said movable part (1), the said movable part (1) having at least one end-of-travel position and being able to be moved by means of an electric actuator (2), a command system (5) being able to receive a movement instruction (7) via command means (4) and to command the activation of the said electric actuator (2) in response to the receipt of the said movement instruction (7), the said detection system comprising a memory (13, 14) for storing an end-of-travel threshold value S, and being able to successively measure power supply current values (I) of the said electric actuator (2) after each receipt by the said command system (5) of a movement instruction (7) and during the movement of the said movable part (1), in order to deliver a signal characteristic of the end-of-travel state of the said movable part (1) when the said measured current value (I) is greater than the said end-of-travel threshold value S, the said power supply current (I) being able successively to take values equal to a starting inrush current ($I_{max}$) of the said electric actuator (2), values equal to a transfer current during the movement of the said movable part (1) and values equal to a locking current ($I_{bloc}$) of the said electric actuator (2) when the said movable part (1) is at the end of travel, the said detection system being able to measure actual values of the said starting inrush current ($I_{max}$) and to update the said stored end-of-travel threshold value S according to the said actual measured values of the said starting inrush current ($I_{max}$), **characterized in that** it is able to acquire the said successive measurements of the power supply current values (I) by periodic sampling, the said successive measurements of the actual values of the said starting inrush current ($I_{max}$) being acquired at a high sampling frequency $f_1$ for an initial high frequency acquisition period ($D_{HF}$) beginning with the enabling of a high frequency sampling condition.

2.  Detection system according to Claim 1, **characterized in that** the said high frequency sampling condition is enabled by the receipt by the said command system (5) of a movement instruction (7).

3.  Detection system according to Claim 1, **characterized in that** the said successive measurements of the power supply current values (I) are acquired at a low sampling frequency $f_2$ lower than the said high sampling frequency $f_1$ substantially from the receipt by the said command system (5) of a movement instruction (7) and up to the enabling of the said high frequency sampling condition.

4. Detection system according to Claim 3, **characterized in that** the said low sampling frequency $f_2$ is substantially equal to 1 kHz, the said high sampling frequency $f_1$ being substantially equal to 10 kHz.

5. Detection system according to Claim 3 or 4, **characterized in that** the said high frequency sampling condition is enabled when the said measured current value (I) is greater than a start-up threshold value I.

6. Detection system according to Claim 5, **characterized in that** the said start-up threshold value I is predetermined.

7. Detection system according to one of Claims 1 to 6, **characterized in that** the updating of the said end-of-travel threshold value S consists in giving it the last maximum measured value of the said starting inrush current reduced by a tolerance value.

8. Detection system according to one of Claims 1 to 7, **characterized in that** it is able to successively measure actual values of the voltage ($U_{alim}$) delivered by a battery (3) supplying the said electric actuator (2), to store the said last maximum measured value of the starting inrush current and to update it according to the said actual measured values of the said delivered voltage ($U_{alim}$).

9. Detection system according to Claim 8, **characterized in that** the said maximum value of the stored starting inrush current is updated proportionally to the said actual measured values of the said delivered voltage ($U_{alim}$).

10. Detection system according to Claim 7 taken in combination with one of Claims 8 or 9, **characterized in that** it is able to store the said tolerance value and to update it according to the said actual measured values of the said delivered voltage ($U_{alim}$).

11. Detection system according to Claim 7, **characterized in that** the said tolerance value is predetermined, substantially equal to 1.5 A.

12. Detection system according to Claim 7, **characterized in that** the said tolerance value is zero.

13. Detection system according to one of Claims 8 to 10, **characterized in that** it is able to update the said initial high frequency acquisition period ($D_{HF}$) according to the said measured actual values of the said delivered voltage ($U_{alim}$).

14. Detection system according to one of Claims 1 to 12, **characterized in that** the said initial high frequency acquisition period ($D_{HF}$) is predetermined, lying substantially between 5 and 20 ms.

15. System for detecting the end-of-travel position of a movable part (1) according to one of Claims 1 to 14, **characterized in that** it is capable of converting the said measured analogue values of the power supply current (I) into a digital representation (i).

**Patentansprüche**

1. Detektionssystem für die Endposition eines beweglichen Teils (1), wobei das Detektionssystem (5, 8, 9, 11-15) keinen mit dem beweglichen Teil (1) zusammenwirkenden Endpositionssensor aufweist, wobei das bewegliche Teil (1) wenigstens eine Endposition besitzt und mittels eines elektrischen Aktuators (2) bewegt werden kann, wobei ein Steuerungssystem (5) über Steuermittel (4) einen Bewegungsbefehl (7) empfangen und die Aktivierung des elektrischen Aktuators (2) als Antwort auf den Empfang des Bewegungsbefehls (7) steuern kann, wobei das Detektionssystem einen Speicher (13, 14) zum Speichern eines Grenzwerts für das Ende der Wegstrecke (S) aufweist und, nach jedem Empfang eines Bewegungsbefehls (7) durch das Steuerungssystem (5) und während der Bewegung des beweglichen Teils (1), aufeinanderfolgend Werte des Versorgungsstroms (I) des elektrischen Aktuators (2) messen kann, um ein für den Zustand am Ende der Wegstrecke des beweglichen Teils (1) charakteristisches Signal zu liefern, wenn der Wert des gemessenen Stroms (I) größer als der Grenzwert des Endes der Wegstrecke S ist, wobei der Versorgungsstrom (I) aufeinanderfolgend Werte, die einem Anlaufüberstrom ($I_{max}$) des elektrischen Aktuators (2) entsprechen, Werte, die einem Transfer während der Bewegung des beweglichen Teils (1) entsprechen, und Werten, die einem Blockierstrom ($I_{bloc}$) des elektrischen Aktuators (2) entsprechen, wenn sich das bewegliche Teil (1) am Ende der Wegstrecke befindet, annehmen kann, wobei das Detektionssystem aktuelle Werte des Anlaufüberstroms ($I_{max}$) messen und den gespeicherten Wert für das Ende der Wegstrecke S in Abhängigkeit von den aktuell gemessenen Werten des Anlaufüberstroms ($I_{max}$) aktualisieren kann, **dadurch gekennzeichnet, dass** es die aufeinanderfolgenden Messungen der Werte des Versorgungsstroms (I) durch periodisches Abtasten erfassen kann, wobei die Erfassung der aufeinanderfolgenden Messungen der aktuellen Werte des Anlaufüberstroms ($I_{max}$) während eines anfänglichen Hochfrequenz-Datenerfassungszeitraums ($D_{HF}$), der mit der Validierung einer Hochfrequenzabtastbedingung beginnt, mit einer hohen Abtastfrequenz $f_1$ durchgeführt wird.

2. Detektionssystem gemäß Anspruch 1, **dadurch gekennzeichnet, dass** die Hochfrequenzabtastbedingung durch den Empfang eines Bewegungsbefehls (7) durch das Steuerungssystem (5) validiert wird.

3. Detektionssystem gemäß Anspruch 1, **dadurch gekennzeichnet, dass** die Erfassung der aufeinanderfolgenden Messungen der Werte des Versorgungsstroms (I) im wesentlichen ab dem Empfang eines Bewegungsbefehls (7) durch das Steuerungssystem (5) und bis zu der Validierung der Hochfrequenzabtastbedingung mit einer niedrigen Abtastfrequenz $f_2$, die kleiner als die hohe Abtastfrequenz $f_1$ ist, durchgeführt wird.

4. Detektionssystem gemäß Anspruch 3, **dadurch gekennzeichnet, dass** die niedrige Abtastfrequenz $f_2$ im wesentlichen 1 kHz beträgt, während die hohe Abtastfrequenz $f_1$ im wesentlichen 10 kHz beträgt.

5. Detektionssystem gemäß Anspruch 3 oder 4, **dadurch gekennzeichnet, dass** die Hochfrequenzabtastbedingung validiert wird, wenn der gemessene Wert des Stroms (I) größer als ein Anlaufgrenzwert I ist.

6. Detektionssystem gemäß Anspruch 5, **dadurch gekennzeichnet, dass** der Anlaufgrenzwert I vorgegeben ist.

7. Detektionssystem gemäß einem der Ansprüche 1 bis 6, **dadurch gekennzeichnet, dass** die Aktualisierung des Grenzwerts für das Ende der Wegstrecke S darin besteht, ihm den letzten gemessenen Maximalwert des Anlaufüberstroms abzüglich eines Toleranzwertes zuzuweisen.

8. Detektionssystem gemäß einem der Ansprüche 1 bis 7, **dadurch gekennzeichnet, dass** es aufeinanderfolgende aktuelle Werte der Spannung ($U_{alim}$), die von einer die Versorgung des elektrischen Aktuators (2) gewährleistenden Batterie (3) geliefert wird, messen, den letzten gemessenen Maximalwert des Anlaufüberstroms speichern und ihn in Abhängigkeit von den aktuell gemessenen Werten der gelieferten Spannung ($U_{alim}$) aktualisieren kann.

9. Detektionssystem gemäß Anspruch 8, **dadurch gekennzeichnet, dass** der Maximalwert des gespeicherten Anlaufüberstroms proportional zu den aktuell gemessenen Werten der gelieferten Spannung ($U_{alim}$) aktualisiert wird.

10. Detektionssystem gemäß Anspruch 7 in Kombination mit einem der Ansprüche 8 oder 9, **dadurch gekennzeichnet, dass** es den Toleranzwert speichern und diesen in Abhängigkeit von den aktuell gemessenen Werten der gelieferten Spannung ($U_{alim}$) aktualisieren kann.

11. Detektionssystem gemäß Anspruch 7, **dadurch gekennzeichnet, dass** der Toleranzwert als ein Wert von im wesentlichen 1,5 A vorgegeben ist.

12. Detektionssystem gemäß Anspruch 7, **dadurch gekennzeichnet, dass** der Toleranzwert 0 ist.

13. Detektionssystem gemäß einem der Ansprüche 8 bis 10, **dadurch gekennzeichnet, dass** es den anfänglichen Hochfrequenzerfassungszeitraum ($D_{HF}$) in Abhängigkeit von den aktuell gemessenen Werten der gelieferten Spannung ($U_{alim}$) aktualisieren kann.

14. Detektionssystem gemäß einem der Ansprüche 1 bis 12, **dadurch gekennzeichnet, dass** der anfängliche Hochfrequenzerfassungszeitraum ($D_{HF}$) als ein Wert zwischen im wesentlichen 5 und 20 ms vorgegeben ist.

15. Detektionssystem für die Endposition eines beweglichen Teils (1) gemäß einem der Ansprüche 1 bis 14, **dadurch gekennzeichnet, dass** es die gemessenen analogen Werte des Versorgungsstroms (I) in eine digitale Darstellung (i) umwandeln kann.

FIG.1

FIG.2

FIG.3

FIG.4

FIG.5

FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5399950 A
- EP 0267064 A